# FASCICULE DE BREVET EUROPEEN

(11) **EP 3 130 419 B1**
(45) Date de publication et mention de la délivrance du brevet: **04.07.2018**
(21) Numéro de dépôt: 16178459.0
(22) Date de dépôt: 07.07.2016
(51) Int. Cl.: B23B 49/02

(54) **ADAPTATEUR POUR UNE GRILLE DE PERÇAGE ET GRILLE DE PERÇAGE ÉQUIPÉE DUDIT ADAPTATEUR**
ADAPTER FÜR EIN BOHRGITTER, UND MIT EINEM SOLCHEN ADAPTER AUSGESTATTETES BOHRGITTER
ADAPTER FOR A BORING GRATE AND BORING GRATE PROVIDED WITH SAID ADAPTER

(30) Priorité: 12.08.2015 FR 1557684
(43) Date de publication de la demande: 15.02.2017
(73) Titulaire: AIRBUS OPERATIONS (S.A.S), 31060 Toulouse (FR)
(72) Inventeur: RUTIN, Sullivan, 44160 PONTCHATEAU (FR); THEBAUD, Damien, 44550 SAINT MALO DE GUERSAC (FR)
(74) Mandataire: Gicquel, Olivier Yves Gérard

(56) Documents cités:
- WO-A1-2006/088404
- US-A1- 2012 141 218
- US-B1- 8 529 171

## Description

La présente invention se rapporte à un adaptateur pour une grille de perçage selon le préambule de la revendication 1 ainsi qu'à une grille de perçage équipée d'un tel adaptateur, ledit adaptateur permettant d'utiliser différents types d'unités de perçage automatique avec la même grille de perçage. Un tel adaptateur et une telle grille de perçage sont connus de WO 2006/088404 A. Une unité de perçage automatique UPA (automatic drilling unit ADU en anglais) est utilisée pour réaliser au moins un trou avec un diamètre donné dans une pièce.

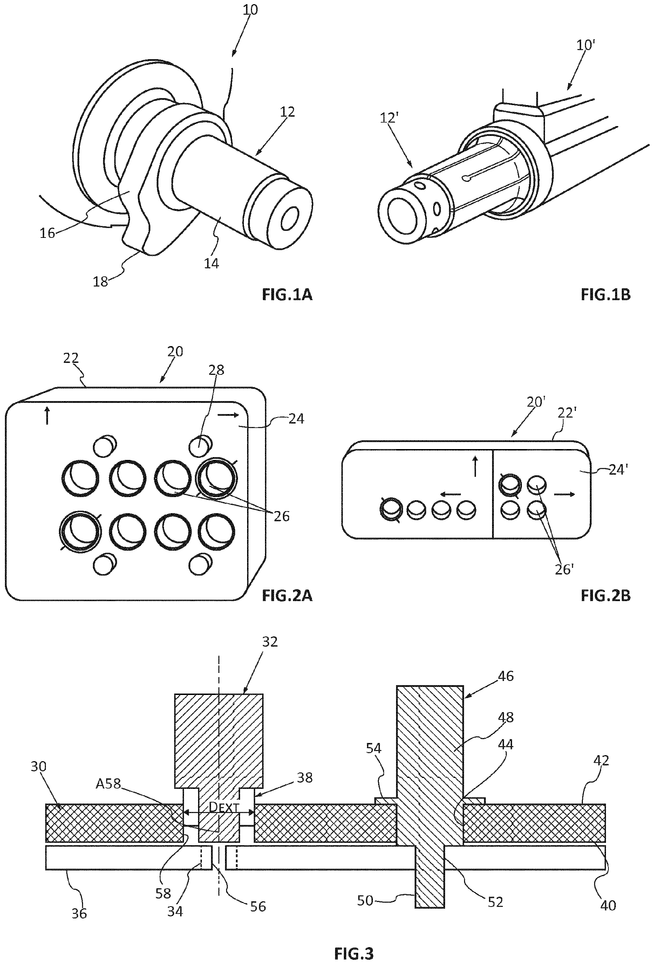

Selon une première variante illustrée sur la figure 1A, une unité de perçage automatique 10 dite à quart de tour comprend un nez 12 qui comporte une portée cylindrique 14 avec un diamètre extérieur fixe et une bague 16 avec en périphérie une forme en saillie 18.

Selon une deuxième variante illustrée sur la figure 1B, une unité de perçage automatique 10' dite à pince de serrage comprend un nez 12' expansible. Pour un diamètre de trou à usiner donné, le nez 12' expansible d'une unité de perçage automatique 10' à pince de serrage a un diamètre extérieur supérieur à celui d'une portée cylindrique 14 d'une unité de perçage automatique 10 à quart de tour.

Pour positionner et guider une unité de perçage automatique lors de la réalisation d'un trou dans une pièce, une grille de perçage est solidarisée à la pièce.

Selon un premier mode de réalisation illustré sur la figure 2A et configuré pour une unité de perçage automatique 10 à quart de tour, une grille de perçage 20 se présente sous la forme d'une plaque avec une première face 22 configurée pour être plaquée contre la pièce à usiner et une deuxième face 24 sensiblement parallèle à la première face 22 et comprend au moins un orifice de guidage 26 débouchant au niveau des première et deuxième faces 22 et 24, dont le diamètre est égal à celui de la portée cylindrique 14 du nez 12 et un pion 28 en saillie par rapport à la deuxième face 24, positionné à proximité de l'orifice de guidage 26. Ce pion 28 est configuré de manière à ce que la forme en saillie 18 de la bague 16 du nez 12 soit en butée contre ledit pion 28 lorsque la portée cylindrique 14 dudit nez 12 est insérée dans l'orifice de guidage 26.

Selon un deuxième mode de réalisation illustré sur la figure 2B et configuré pour une unité de perçage automatique 10' à pince de serrage, une grille de perçage 20' se présente sous la forme d'une plaque avec une première face 22' configurée pour être plaquée contre la pièce à usiner et une deuxième face 24' sensiblement parallèle à la première face 22' et comprend au moins un orifice de guidage 26' débouchant au niveau des première et deuxième faces 22' et 24', dont le diamètre permet l'introduction du nez expansible 12'.

Selon ces modes de réalisation, une grille de perçage 20 configurée pour une unité de perçage automatique 10 à quart de tour ne peut pas être utilisée avec une unité de perçage automatique 10' à pince de serrage car le nez 12' expansible a un diamètre supérieur à celui de l'orifice de guidage 26 de la grille de perçage.

De plus, une grille de perçage 20' configurée pour une unité de perçage automatique 10' à pince de serrage ne peut pas être utilisée avec une unité de perçage automatique 10 à quart de tour car le jeu entre l'orifice de guidage 26' et la portée cylindrique 14 du nez 12 est trop important pour assurer le guidage et aucun pion 28 n'est prévu pour immobiliser la forme en saillie 18 de la bague 16 du nez 12.

Par conséquent, il n'est pas possible d'utiliser une grille de perçage indifféremment avec l'une ou l'autre des unités de perçage automatique.

Aussi, la présente invention vise à remédier cet inconvénient.

A cet effet, l'invention a pour objet un adaptateur pour une grille de perçage selon la revendication 1, ladite grille de perçage comprenant un orifice de guidage pour une unité de perçage automatique à pince de serrage. Cet adaptateur se caractérise en ce qu'il comprend :
- un corps avec une première face et une deuxième face,
- un tube de guidage relié au corps et en saillie par rapport à la deuxième face, ledit tube de guidage comportant une paroi cylindrique extérieure avec un diamètre égal à celui de l'orifice de guidage de la grille de perçage et un conduit intérieur avec un diamètre égal à celui d'une portée cylindrique d'un nez d'une unité de perçage automatique à quart de tour,
- un pion relié au corps, en saillie par rapport à la première face ledit pion étant configuré de manière à ce qu'en fonctionnement une forme en saillie du nez de l'unité de perçage automatique à quart de tour soit en butée contre ledit pion lorsque la portée cylindrique dudit nez est insérée dans le conduit intérieur,
- un système d'immobilisation configuré pour immobiliser l'adaptateur par rapport à la grille de perçage.

Cet adaptateur permet de pouvoir utiliser une unité de perçage automatique à pince de serrage ou à quart de tour avec une même grille de perçage sans aucune modification au niveau des unités de perçage automatique ou au niveau des grilles de perçage adaptées aux unités de perçage automatique à pince de serrage.

Selon une autre caractéristique, le système d'immobilisation comprend un logement positionné au niveau du corps et configuré pour loger une butée immobile par rapport à la grille de perçage. De préférence, le logement a une forme oblongue.

Selon un mode de réalisation, le corps comprend deux branches parallèles formant un U et délimitant entre elles le logement.

Avantageusement, le conduit intérieur est coaxial à la paroi cylindrique extérieure et/ou a un axe perpendiculaire à la deuxième face du corps.

Selon une autre caractéristique, le tube de guidage a une hauteur approximativement égale à l'épaisseur de la grille de perçage.

Selon un mode de réalisation, le pion comprend un pied cylindrique relié au corps et surmonté d'une tête avec un diamètre supérieur à celui du pied, ladite tête et la première face du corps étant séparées d'une distance sensiblement égale à l'épaisseur de la forme en saillie du nez d'une unité de perçage automatique à quart de tour.

L'invention a également pour objet une grille de perçage selon la revendication 9 équipée d'un adaptateur selon l'une des caractéristiques précédentes.

D'autres caractéristiques et avantages ressortiront de la description qui va suivre de l'invention, description donnée à titre d'exemple uniquement, en regard des dessins annexés sur lesquels :
- La figure 1A est une vue en perspective d'une partie d'une unité de perçage automatique qui illustre une première variante de l'art antérieur,
- La figure 1B est une vue en perspective d'une partie d'une unité de perçage automatique qui illustre une deuxième variante de l'art antérieur,
- La figure 2A est une vue de face d'une grille de perçage qui illustre un premier mode de réalisation selon l'art antérieur,
- La figure 2B est une vue de face d'une grille de perçage qui illustre un deuxième mode de réalisation selon l'art antérieur,
- La figure 3 est une coupe d'une grille de perçage positionnée sur une première pièce pour guider une unité de perçage automatique à pince de serrage,
- La figure 4 est une coupe de la grille de perçage visible sur la figure 3 positionnée sur une deuxième pièce et équipée d'un adaptateur pour guider une unité de perçage automatique à quart de tour,
- La figure 5 est une vue de côté d'un adaptateur qui illustre un mode de réalisation selon l'invention,
- La figure 6 est une vue de dessus de l'adaptateur visible sur la figure 5,
- La figure 7 est une coupe selon la ligne VII-VII de la figure 6.

Sur la figure 3, on a représenté une grille de perçage 30 configurée pour guider une unité de perçage automatique 32 à pince de serrage, utilisée pour réaliser un trou 34 dans une pièce 36.

L'unité de perçage automatique 32 à pince de serrage comprend un nez expansible 38 avec un diamètre extérieur Dext.

Selon un mode de réalisation, la grille de perçage 30 se présente sous la forme d'une plaque et comprend une première face 40 orientée vers la pièce 36 et une deuxième face 42 approximativement parallèle à la première face 40.

La grille de perçage 30 est solidarisée temporairement par tout moyen approprié à la pièce 36.

Selon un mode de réalisation, la grille de perçage 30 comprend un orifice traversant 44 qui débouche au niveau des première et deuxième faces 40 et 42 et au moins une agrafe 46 est utilisée pour solidariser la grille de perçage 30 à la pièce 36. Cette agrafe 46 comprend un corps cylindrique 48 dont le diamètre extérieur est égal à celui de l'orifice traversant 44 et une tête 50 dans le prolongement du corps cylindrique 48. Ladite tête 50 a un diamètre extérieur égal à celui d'un trou ou d'un avant-trou 52 réalisé dans la pièce 36 et est configurée de manière à être solidarisée à la pièce 36 par une liaison démontable. Le corps cylindrique 46 comprend une collerette 54 configurée pour prendre appui contre la deuxième face 42 lorsque l'agrafe 46 est solidarisée à la pièce 36.

Bien entendu, d'autres solutions peuvent être utilisées pour solidariser temporairement la grille de perçage 30 à la pièce 36.

Selon un mode opératoire, la pièce 36 comprend un avant trou 56 qui doit être usiné pour obtenir le trou 34.

La grille de perçage 30 comprend au moins un orifice de guidage 58 cylindrique positionné de manière coaxiale au trou 34 à réaliser lorsque la grille de perçage 30 est solidarisée à la pièce 36.

L'orifice de guidage 58 a un diamètre adapté pour permettre l'introduction d'un nez expansible 38 d'une unité de perçage automatique 32 à pince de serrage. Ainsi, la grille de perçage 30 convient pour réaliser des trous avec une unité de perçage automatique 32 à pince de serrage.

Généralement, la grille de perçage 30 comprend plusieurs orifices de guidage 58, chacun positionné de manière coaxiale à un trou à réaliser dans la pièce 36.

L'orifice traversant 44 utilisé dans un premier temps pour permettre le passage d'une agrafe 46 pour solidariser la grille de perçage 30 à la pièce 36 peut être utilisé en tant qu'orifice de guidage dans un second temps pour usiner l'avant trou 52 au diamètre final.

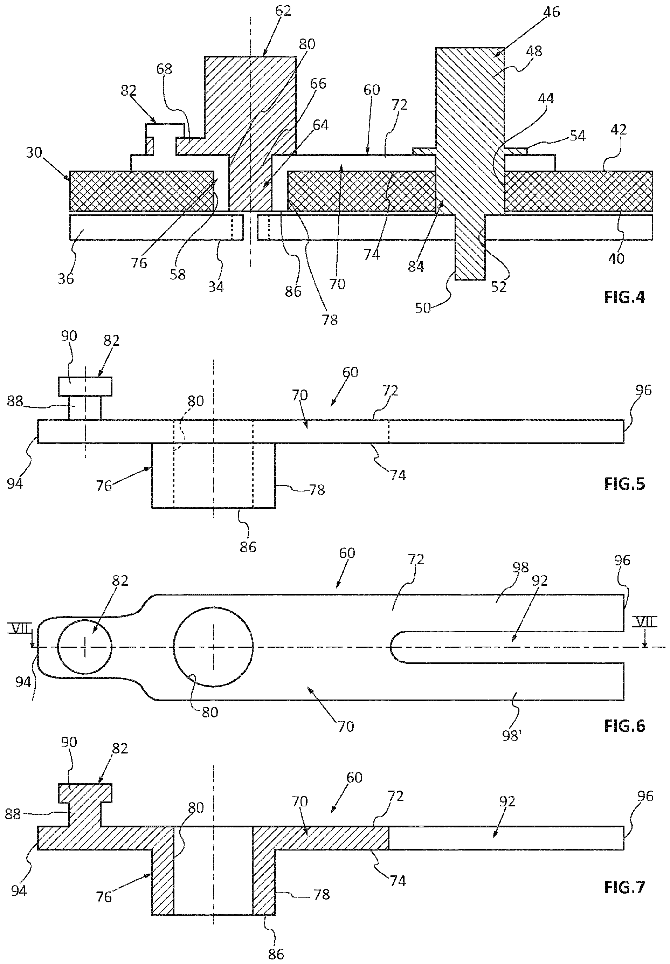

Selon une caractéristique de l'invention, la grille de perçage 30 est équipée d'un adaptateur 60, illustré sur les figures 4 à 7, pour permettre l'utilisation d'une unité de perçage automatique 62 à quart de tour avec ladite grille de perçage 30.

De manière connue, comme illustré sur la figure 4, l'unité de perçage automatique 62 à quart de tour comprend un nez 64 qui comporte une portée cylindrique 66 avec un diamètre extérieur fixe et une forme en saillie 68 en périphérie, configurée pour immobiliser en rotation ladite unité de perçage automatique 62.

Le diamètre extérieur de la portée cylindrique 66 est inférieur à celui de l'orifice de guidage 58 qui ne peut pas assurer seul un positionnement et un guidage de ladite unité de perçage automatique 62 à quart de tour.

Comme illustré sur les figures 4 à 7, l'adaptateur 60 comprend :
- un corps 70 avec une première face 72 et une deuxième face 74 sensiblement parallèle à la première face 72 et configurée pour être plaquée contre la deuxième face 42 de la grille de perçage 30 lorsque l'adaptateur 60 équipe la grille de perçage 30,
- un tube de guidage 76 relié au corps 70 et en saillie par rapport à la deuxième face 74, ledit tube de guidage 76 comportant une paroi cylindrique extérieure 78 avec un diamètre égal à celui de l'orifice de guidage 58 de la grille de perçage 30 et un conduit intérieur 80 avec un diamètre égal à celui de la portée cylindrique 66 du nez 64 de l'unité de perçage automatique 62 à quart de tour,
- un pion 82 relié au corps 70, en saillie par rapport à la première face 72.

Un système 84 d'immobilisation dudit adaptateur 60 est prévu pour l'immobiliser par rapport à la grille de perçage 30.

Pour la présente demande, on considère que deux diamètres de deux pièces sont égaux lorsque le jeu entre les deux pièces correspond à un ajustement glissant ou légèrement serré.

Selon un mode de réalisation, le tube de guidage 76 a une face terminale 86 sensiblement parallèle à la deuxième face 74 du corps 70 de l'adaptateur 60, ladite face terminale 86 et ladite deuxième face 74 étant séparées d'une distance correspondant à la hauteur du tube de guidage 76. De préférence, la hauteur du tube de guidage 76 est approximativement égale à l'épaisseur de la grille de perçage 30 qui correspond à la distance qui sépare les première et deuxième faces 40 et 42.

Le conduit intérieur 80 débouche au niveau de la face terminale 86 et de la première face 72 du corps et a un axe perpendiculaire à la deuxième face 74 du corps. De préférence, le conduit intérieur 80 est coaxial à la paroi cylindrique extérieure 78.

Le pion 82 est configuré de manière à ce que la forme en saillie 68 du nez 64 de l'unité de perçage automatique 62 à quart de tour soit en butée contre ledit pion 82 lorsque la portée cylindrique 66 dudit nez 64 est insérée dans le conduit intérieur 80. Ainsi, la distance entre le pion 82 et l'axe du conduit intérieur 80 est inférieure à la distance maximale entre l'axe du nez 64 de l'unité de perçage automatique 62 à quart de tour et la forme en saillie 68 du nez. Selon un mode de réalisation, le pion 82 a une forme cylindrique avec un pied 88 cylindrique relié au corps 70 de l'adaptateur 60 et surmonté d'une tête 90, ladite tête 90 ayant un diamètre supérieur à celui du pied 88. De préférence, la distance entre la tête 90 et la première face 72 du corps est sensiblement égale à l'épaisseur de la forme en saillie 68 qui correspond à la dimension de ladite forme en saillie 68 selon l'axe du nez 64.

Lorsque le tube de guidage 76 est inséré dans l'orifice de guidage 58 de la grille de perçage 30, l'adaptateur 60 peut uniquement pivoter autour de l'axe de l'orifice de guidage 58 par rapport à la grille de perçage 30.

Le système 84 d'immobilisation est configuré pour bloquer le pivotement de l'adaptateur 60 autour de l'axe de l'orifice de guidage 58 par rapport à la grille de perçage 30.

De préférence, le système 84 d'immobilisation comprend d'une part un logement 92 ménagé au niveau du corps 70 de l'adaptateur et d'autre part une butée immobile par rapport à la grille de perçage 30, le logement 92 et la butée ayant des formes qui coopèrent de sorte à immobiliser en rotation l'adaptateur 60 par rapport à la grille de perçage 30.

Selon un mode de réalisation, la butée correspond à l'agrafe 46 utilisée pour solidariser la grille de perçage 30 à la pièce 36.

De préférence, le logement 92 a une forme oblongue. Cette solution permet de pouvoir utiliser le même adaptateur avec différentes grilles de perçage qui comprennent des configurations différentes en matière d'écartement entre l'agrafe 46 et l'orifice de guidage 58.

Selon un mode de réalisation, la forme oblongue du logement 92 a une plus grande dimension alignée avec les axes du pion 82 et du conduit intérieur 80. Selon ce mode de réalisation, le conduit intérieur 80 est positionné entre le logement 92 et le pion 82.

De préférence, le logement 92 est ouvert et n'a pas un contour fermé. Cette solution permet la mise en place de l'adaptateur 60 même si l'agrafe 46 est déjà mise en place.

Selon un mode de réalisation, le corps 70 de l'adaptateur a une forme allongée, le pion 82 étant positionné à une première extrémité 94, le logement 92 débouchant au niveau d'une seconde extrémité 96.

Selon ce mode de réalisation, le corps 70 comprend deux branches 98, 98' parallèles formant un U et délimitant entre elles le logement 92.

## Revendications

1. Adaptateur pour une grille de perçage (30), ladite grille de perçage (30) comprenant un orifice de guidage (58) pour une unité de perçage automatique à pince de serrage, ledit adaptateur comprenant :
- un corps (70) avec une première face (72) et une deuxième face (74),
- un tube de guidage (76) relié au corps (70) et en saillie par rapport à la deuxième face (74), ledit tube de guidage (76) comportant une paroi cylindrique extérieure (78) avec un diamètre égal à celui de l'orifice de guidage (58) de la grille de perçage (30) et un conduit intérieur (80) avec un diamètre égal à celui d'une portée cylindrique (66) d'un nez (64) d'une unité de perçage automatique (62) à quart de tour,
- un système (84) d'immobilisation configuré pour immobiliser l'adaptateur par rapport à la grille de perçage (30), ledit adaptateur étant **caractérisé en ce qu'**il comprend :
- un pion (82) relié au corps (70), en saillie par rapport à la première face (72) ledit pion (82) étant configuré de manière à ce qu'en fonctionnement une forme en saillie (68) du nez (64) de l'unité de perçage automatique (62) à quart de tour soit en butée contre ledit pion (82) lorsque la portée cylindrique (66) dudit nez (64) est insérée dans le conduit intérieur (80).

2. Adaptateur selon la revendication 1, **caractérisé en ce que** le système (84) d'immobilisation comprend un logement (92) positionné au niveau du corps (70) et configuré pour loger une butée immobile par rapport à la grille de perçage (30).

3. Adaptateur selon la revendication 2, **caractérisé en ce que** le logement (92) a une forme oblongue.

4. Adaptateur selon la revendication 2 ou 3, **caractérisé en ce que** le corps (70) comprend deux branches (98, 98') parallèles formant un U et délimitant entre elles le logement (92).

5. Adaptateur selon l'une des revendications précédentes, **caractérisé en ce que** le conduit intérieur (80) est coaxial à la paroi cylindrique extérieure (78).

6. Adaptateur selon l'une des revendications précédentes, **caractérisé en ce que** le conduit intérieur (80) a un axe perpendiculaire à la deuxième face (74) du corps (70).

7. Adaptateur selon l'une des revendications précédentes, **caractérisé en ce que** le tube de guidage (76) a une hauteur approximativement égale à l'épaisseur de la grille de perçage (30).

8. Adaptateur selon l'une des revendications précédentes, **caractérisé en ce que** le pion (82) comprend un pied (88) cylindrique relié au corps (70) et surmonté d'une tête (90) avec un diamètre supérieur à celui du pied (88), ladite tête (90) et la première face (72) du corps étant séparées d'une distance sensiblement égale à l'épaisseur de la forme en saillie (68) du nez (64) de l'unité de perçage automatique (62) à quart de tour.

9. Grille de perçage équipée d'un adaptateur selon l'une des revendications précédentes.

## Patentansprüche

1. Adapter für ein Bohrgitter (30), wobei das Bohrgitter (30) eine Führungsöffnung (58) für eine automatische Bohreinheit mit Spannzange umfasst, wobei der Adapter umfasst:
- einen Körper (70) mit einer ersten Seite (72) und einer zweiten Seite (74),
- ein Führungsrohr (76), das mit dem Körper (70) verbunden ist und in Bezug zur zweiten Seite (74) herausragt, wobei das Führungsrohr (76) eine zylindrische Außenwand (78) mit einem Durchmesser gleich jenem der Führungsöffnung (58) des Bohrgitters (30) und eine Innenleitung (80) mit einem Durchmesser gleich jenem eines zylindrischen Bereichs (66) einer Nase (64) einer automatischen Bohreinheit (62) mit Vierteldrehung umfasst,
- ein Feststellungssystem (84), das eingerichtet ist, um den Adapter in Bezug zum Bohrgitter (30) festzustellen, wobei der Adapter **dadurch gekennzeichnet ist, dass** er umfasst:
- einen Stift (82), der mit dem Körper (70) verbunden ist und in Bezug zur ersten Seite (72) herausragend ist, wobei der Stift (82) eingerichtet ist, dass während des Betriebs eine herausragende Form (68) der Nase (64) der automatischen Bohreinheit (62) mit Vierteldrehung an dem Stift (82) zum Anschlag gelangt, wenn der zylindrische Bereich (66) der Nase (64) in die Innenleitung (80) eingesetzt ist.

2. Adapter nach Anspruch 1, **dadurch gekennzeichnet, dass** das Feststellungssystem (84) eine Aufnahme (92) umfasst, die im Bereich des Körpers (70) positioniert und eingerichtet ist, um einen feststehenden Anschlag in Bezug zum Bohrgitter (30) anzuordnen.

3. Adapter nach Anspruch 2, **dadurch gekennzeichnet, dass** die Aufnahme (92) eine längliche Form hat.

4. Adapter nach Anspruch 2 oder 3, **dadurch gekennzeichnet, dass** der Körper (70) zwei parallele Schenkel (98, 98') umfasst, die ein U bilden und zwischen sich die Aufnahme (92) begrenzen.

5. Adapter nach einem der vorhergehenden Ansprüche, **dadurch gekennzeichnet, dass** die Innenleitung (80) zur zylindrischen Außenwand (78) koaxial ist.

6. Adapter nach einem der vorhergehenden Ansprüche, **dadurch gekennzeichnet, dass** die Innenleitung (80) eine Achse senkrecht auf die zweite Seite (74) des Körpers (70) hat.

7. Adapter nach einem der vorhergehenden Ansprüche, **dadurch gekennzeichnet, dass** das Führungsrohr (76) eine Höhe annähernd gleich der Dicke des Bohrgitters (30) hat.

8. Adapter nach einem der vorhergehenden Ansprüche, **dadurch gekennzeichnet, dass** der Stift (82) einen zylindrischen Fuß (88) umfasst, der mit dem Körper (70) verbunden ist, und über dem ein Kopf (90) mit einem größeren Durchmesser als jener des Fußes (88) montiert ist, wobei der Kopf (90) und die erste Seite (72) des Körpers um einen Abstand im Wesentlichen gleich der Dicke der herausragenden Form (68) der Nase (64) der automatischen Bohreinheit (62) mit Vierteldrehung getrennt sind.

9. Bohrgitter, das mit einem Adapter nach einem der vorhergehenden Ansprüche ausgestattet ist.

## Claims

1. Adapter for a boring grate (30), the said boring grate (30) comprising a guide orifice (58) for an automatic boring unit having a clamp, the said adapter comprising:
- a body (70) with a first face (72) and a second face (74),
- a guide tube (76) connected to the body (70) and projecting with respect to the second face (74), the said guide tube (76) comprising an outer cylindrical wall (78) with a diameter equal to that of the guide orifice (58) of the boring grate (30) and an inner duct (80) with a diameter equal to that of a cylindrical bearing surface (66) of a nose (64) of a quarter-turn automatic boring unit (62),
- an immobilization system (84) configured to immobilize the adapter with respect to the boring grate (30), the said adapter being **characterized in that** it comprises:
- a pin (82) connected to the body (70) and projecting with respect to the first face (72), the said pin (82) being configured in such a way that, in operation, a projecting shape (68) of the nose (64) of the quarter-turn automatic boring unit (62) butts against the said pin (82) when the cylindrical bearing surface (66) of the said nose (64) is inserted into the inner duct (80).

2. Adapter according to Claim 1, **characterized in that** the immobilization system (84) comprises a housing (92) positioned in the body (70) and configured to house a stop which is immovable with respect to the boring grate (30).

3. Adapter according to Claim 2, **characterized in that** the housing (92) has an oblong shape.

4. Adapter according to Claim 2 or 3, **characterized in that** the body (70) comprises two parallel branches (98, 98') forming a U and delimiting between them the housing (92).

5. Adapter according to one of the preceding claims, **characterized in that** the inner duct (80) is coaxial to the outer cylindrical wall (78).

6. Adapter according to one of the preceding claims, **characterized in that** the inner duct (80) has an axis perpendicular to the second face (74) of the body (70).

7. Adapter according to one of the preceding claims, **characterized in that** the guide tube (76) has a height approximately equal to the thickness of the boring grate (30).

8. Adapter according to one of the preceding claims, **characterized in that** the pin (82) comprises a cylindrical foot (88) connected to the body (70) and surmounted by a head (90) with a diameter greater than that of the foot (88), the said head (90) and the first face (72) of the body being separated by a distance substantially equal to the thickness of the projecting shape (68) of the nose (64) of the quarter-turn automatic boring unit (62).

9. Boring grate equipped with an adapter according to one of the preceding claims.
